# NOUVEAU FASCICULE DE BREVET EUROPEEN

(11) **EP 3 083 191 B2**
(45) Date de publication et mention de la décision concernant l'opposition: **07.06.2023**
(45) Mention de la délivrance du brevet: 03.06.2020
(21) Numéro de dépôt: 14824059.1
(22) Date de dépôt: 09.12.2014
(51) Int. Cl.: B29C 49/48, B29C 49/62, B29C 49/06

(54) **ÉLÉMENT DE MOULE POUR LE FORMAGE DE RÉCIPIENT, POURVU D'ÉVENTS DE DÉCOMPRESSION SOUS FORME DE FENTES**
FORMELEMENT MIT DEKOMPRIMIERUNGSÖFFNUNGEN IN FORM VON SCHLITZEN ZUR HERSTELLUNG EINES BEHÄLTERS
MOULD ELEMENT FOR FORMING A CONTAINER, PROVIDED WITH DECOMPRESSION VENTS IN THE FORM OF SLOTS

(30) Priorité: 19.12.2013 FR 1363089
(43) Date de publication de la demande: 26.10.2016
(73) Titulaire: Sidel Participations, 76930 Octeville-sur-Mer (FR)
(72) Inventeur: LANGLOIS, Jean-Christophe, F-76930 Octeville sur Mer (FR); BECHEN, Régis, F-76930 Octeville sur Mer (FR); BOUKOBZA, Michel, F-76930 Octeville sur Mer (FR); LETESTU, Mickael, F-76930 Octeville sur Mer (FR)
(74) Mandataire: Sidel Group
(86) Numéro de dépôt international: PCT/FR2014/053231
(87) Numéro de publication internationale: WO 2015/092213

(56) Documents cités:
- DE-A1-102010 032 618
- JP-A- H08 267 557
- US-A1- 2010 255 141
- US-A1- 2011 223 275
- US-B2- 7 134 867

## Description

L'invention a trait au formage des récipients à partir d'ébauches en matière plastique, par soufflage ou étirage soufflage dans un moule à l'empreinte d'un modèle de récipient à former. Le terme « ébauche » désigne non seulement une préforme (ordinairement obtenue par injection), mais également un récipient intermédiaire ayant subi une opération préalable de soufflage à partir d'une préforme.

Un moule comprend d'ordinaire plusieurs éléments monoblocs ayant chacun une face de moulage à l'empreinte d'une partie au moins du récipient. Ainsi, un moule destiné au formage de récipients comprend une paroi latérale à l'empreinte d'un corps et d'une épaule du récipient, généralement divisée en deux demi-moules mutuellement articulés pour permettre l'introduction d'une ébauche dans le moule, et un fond de moule à l'empreinte d'un fond du récipient, ce fond de moule étant positionné dans une ouverture ménagée entre les demi-moules à l'opposé de l'épaule. Pour certains récipients ayant des formes locales particulières (par exemple des excroissances ou des réserves en creux formant poignée), le moule peut comprendre des inserts mobiles à l'empreinte de ces formes.

Un élément de moule est généralement percé d'un ou plusieurs évents de décompression permettant d'évacuer l'air emprisonné entre la matière de la préforme en cours de formage et la paroi du moule.

De tels évents de décompression sont en particulier prévus dans le fond de moule, et plus précisément dans les zones atteintes en dernier par la matière. La demande internationale WO 00/74925 (KRUPP) illustre un fond de moule destiné à un fond pétaloïde : ce fond est muni d'évents de décompression formés par des perçages pratiqués dans des réserves en creux du fond de moule correspondant à des pieds du récipient. Les documents DE10 2010 1032618A1 et US2010/255141A1 décrivent des éléments de moule ayant des évents sous forme de fente où la fente est constituée par le jeu entre deux pièces. Ces éléments de moules ne sont par conséquent pas monobloc.

Une telle architecture ne va pas sans inconvénient. En effet, la taille (c'est-à-dire le diamètre) des évents doit être limitée, pour éviter le fluage de la matière dans les évents lors du formage et l'apparition subséquente de points saillants de matière à la surface du récipient formé. Il en résulte une limitation du débit d'air évacué par les évents, ce qui ralentit le formage et peut nuire à une bonne prise d'empreinte en raison du refroidissement (et donc de la rigidification) rapide de la matière avant qu'elle n'ait pu complètement épouser les reliefs formés sur la paroi du moule.

Une solution possible pour remédier à cette difficulté est de multiplier les évents en perçant une multitude de trous. Cette solution permet d'augmenter le débit d'air évacué lors du formage, mais elle engendre une multiplication des opérations d'usinage et, pour les surfaces complexes (notamment celles des fonds de moule destinés aux fonds pétaloïde), nécessite le recours à des machines d'usinage multi-axes dont la programmation est complexe.

On connaît par ailleurs du brevet français FR 2 947 755 (COMEP) un fond de moule constitué de deux pièces emboîtables au moyen de découpes et de reliefs correspondants. Des évents sont réalisés en bordure de l'une des deux pièces. Une telle solution souffre toutefois de la nécessité de réaliser deux pièces, avec des tolérances de fabrication strictes pour permettre un assemblage ajusté sans jeu (sauf à admettre que le récipient obtenu présente des imperfections, et en particulier des plis de matière correspondant à l'interface entre les deux pièces du fond de moule).

Un premier objectif est de proposer un élément de moule monobloc muni d'évents pour l'évacuation de l'air au cours du formage, permettant d'accroître le débit d'air.

Un deuxième objectif est de proposer un élément de moule monobloc qui soit de fabrication relativement aisée.

Un troisième objectif est de proposer un élément de moule muni d'évents dont la forme, la disposition et/ou les dimensions n'entraîne pas de marque sur la face externe du récipient.

Pour remplir l'un au moins de ces objectifs, il est proposé, en premier lieu, un élément de moule monobloc destiné à un moule pour la fabrication de récipients par soufflage ou étirage soufflage à partir d'ébauches en matière plastique selon chacune des revendications 1 à 4.

Grâce à cette disposition, l'évent offre une section de passage accrue, ce qui permet d'augmenter le débit d'air lors du formage. Il en résulte une meilleure soufflabilité du récipient (c'est-à-dire une meilleure capacité du récipient à prendre l'empreinte du moule).

Diverses caractéristiques supplémentaires peuvent être prévues, seules ou en combinaison :
- le ou chaque évent présente une longueur et une largeur telles que la longueur est supérieure au double de la largeur ;
- au moins un évent présente une ouverture qui s'étend selon un profil curviligne ;
- au moins un évent présente une ouverture qui s'étend selon un profil droit ;
- au moins un évent va en s'évasant depuis son ouverture interne vers une ouverture externe sur une face externe de l'élément de moule ;
- l'élément de moule comprend une série d'évents qui s'étendent de manière sensiblement parallèle ;
- l'élément de moule comprend, dans chaque réserve en creux, trois évents, à savoir un évent médian qui s'étend le long d'une ligne médiane de la réserve, encadré d'une paire d'évents latéraux qui s'étendent sensiblement à la jonction entre la réserve en creux et les nervures voisines ;

Il est proposé, en deuxième lieu, un moule pour la fabrication de récipients à partir d'ébauches en matière plastique, qui comprend au moins un élément de moule tel que présenté ci-dessus.

D'autres objets et avantages de l'invention apparaîtront à la lumière de la description d'un mode de réalisation, faite ci-après en référence aux dessins annexés dans lesquels :
- la figure 1 est une vue en perspective d'un moule pour le formage de récipients à fond pétaloïde, qui comprend deux demi-moules articulés et un fond de moule ;
- la figure 2 est une vue en perspective du fond de moule ;
- la figure 3 est une vue de dessus du fond de moule ;
- la figure 4 est une vue en perspective, en coupe et en arraché partiels, de l'élément de la figure 3, suivant la ligne de coupe IV-IV, cette coupe n'étant pas totalement traversante ; la matière coupée verticalement et radialement apparaît en noir ; la matière coupée horizontalement présente des hachures ; la matière coupée transversalement présente un motif quadrillé ;
- la figure 5 est une vue de détail de l'élément de fond de moule des figures précédentes, selon l'encart V de la figure 4 ;
- la figure 6 est une vue de détail de l'élément de fond de moule des figures précédentes, selon l'encart VI de la figure 4 ;
- la figure 7 est une vue de détail du fond de moule de la figure 3, selon l'encart VII ;
- la figure 8 est une vue de détail en coupe du fond de moule de la figure 7, selon le plan de coupe VIII-VIII ;
- la figure 9 est une vue en perspective en coupe d'un fond de moule selon une variante de réalisation ;
- la figure 10 est une vue en perspective, en arraché, d'un demi-moule selon une variante de réalisation.

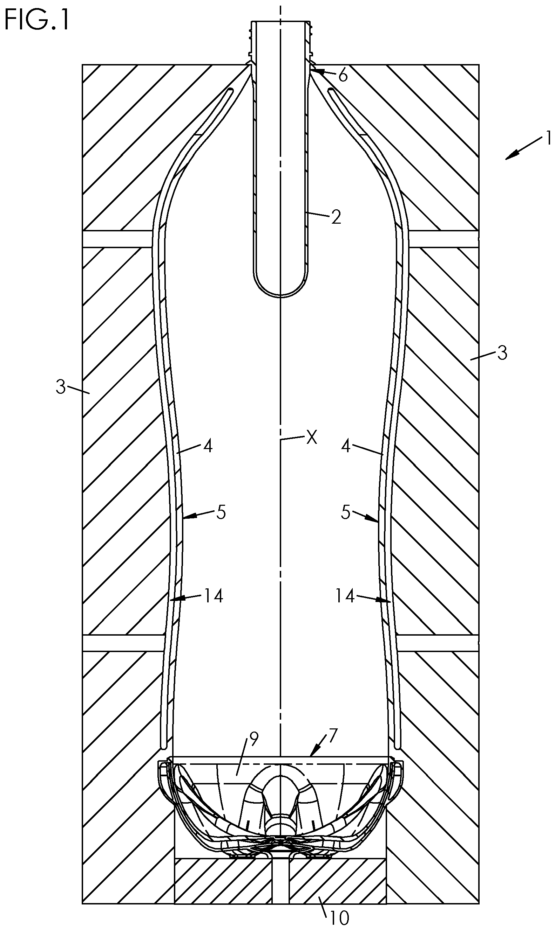

On a représenté sur la figure 1 un moule 1 pour le formage d'un récipient à partir d'une ébauche 2 en matière plastique, par soufflage ou étirage soufflage.

L'ébauche **2** peut être un récipient intermédiaire ayant subi une première opération de soufflage à partir d'une préforme. Il peut également s'agir, comme dans l'exemple illustré, d'une préforme obtenue par injection d'une matière plastique telle que PET.

Le moule **1** inclut plusieurs éléments monoblocs réalisés de préférence dans une matière métallique, par exemple en acier ou en aluminium, éventuellement alliés pour accroître leurs performances mécaniques et/ou de résistance à la corrosion.

Ainsi, dans l'exemple illustré, le moule inclut deux demi-moules **3** mutuellement articulés autour d'un axe X vertical pour permettre l'introduction de l'ébauche **2** (comme décrit par exemple dans la demande de brevet français FR 2 856 333 ou dans la demande internationale correspondante WO 05/002820), et ayant chacun une paroi **4** de moulage définissant une face **5** de moulage en relief, à l'empreinte d'un corps du récipient à former.

Les deux demi-moules **3** définissent, à une extrémité supérieure, une ouverture **6** au travers de laquelle la préforme **2** s'étend pendant le formage du récipient. Les deux demi-moules **3** étant identiques, on utilise indifféremment pour chacun, dans ce qui suit, les mêmes références numériques.

Le moule **1** inclut en outre un fond **7** de moule monobloc comprenant une paroi **8** de moulage définissant une face **9** de moulage en relief à l'empreinte d'un fond du récipient. Comme illustré, le fond **7** de moule peut être monté sur un support **10** de fond de moule, appelé sellette. La sellette **10** est mobile en translation suivant une direction axiale confondue avec l'axe X central.

La sellette **10** n'est que grossièrement représentée sur la figure 1. A titre d'exemple de réalisation non limitatif d'une telle sellette, on pourra se reporter à la demande internationale WO 2008/000938 (Sidel).

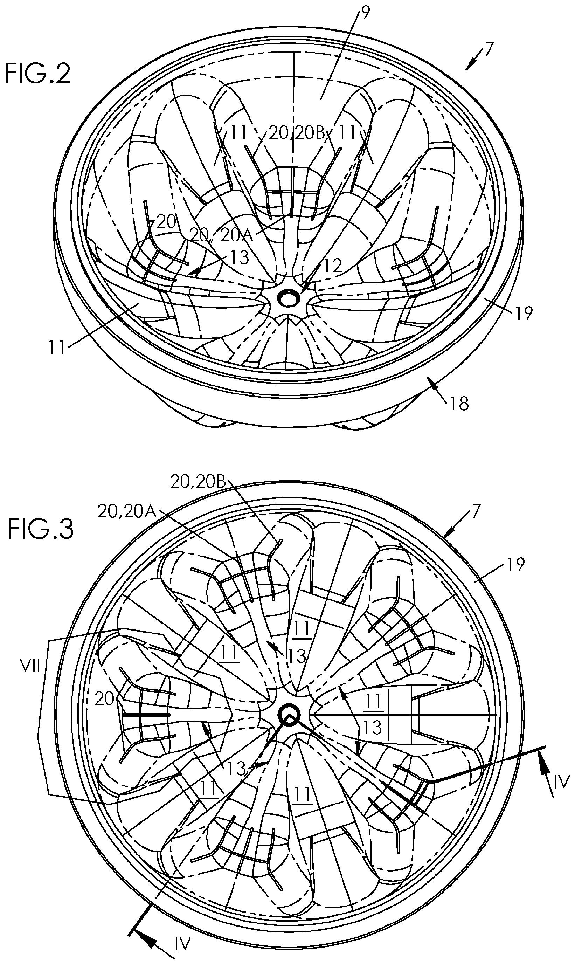

Le récipient à former est en l'occurrence à fond de type pétaloïde, ce qui ressort bien des figures 2, 3 et 4. On voit en effet que la face **9** de moulage du fond **7** de moule est bosselée et présente, lorsqu'examinée en révolution autour de l'axe X central du moule, une alternance de nervures **11** (à l'empreinte de vallées sur le fond pétaloïde) qui rayonnent à partir d'une zone **12** centrale voisine de l'axe X, et de réserves **13** en creux (à l'empreinte de pieds sur le fond pétaloïde) qui s'étendent entre les nervures **11.** Dans l'exemple illustré, le nombre de nervures **11** (identique au nombre de réserves **13** en creux) est de cinq, mais ce nombre, purement illustratif, pourrait être différent.

Chaque élément de moule peut comprendre, comme dans l'exemple illustré, une cavité **14, 15** incluse dans l'élément **3, 7** de moule, dans laquelle un fluide caloporteur circule lors du formage du récipient pour assurer l'échange thermique avec celui-ci.

Cette cavité **14, 15** est ici entièrement délimitée par la matière de l'élément **3, 7** de moule, sans être, même partiellement, délimitée par une pièce rapportée.

Sur la figure 1, on a représenté une telle cavité **14** formée dans chacun des demi-moules **3.** Cette cavité **14** épouse sensiblement le relief de la face **5** de moulage à l'empreinte du corps du récipient, ce qui permet un échange thermique relativement homogène sur l'ensemble du corps. Par ailleurs, on voit sur la figure 1 que la paroi **4** de moulage est relativement mince (et d'épaisseur sensiblement uniforme, ce qui n'est pas une obligation), ce qui bénéfice à l'efficacité du refroidissement (ou de la chauffe).

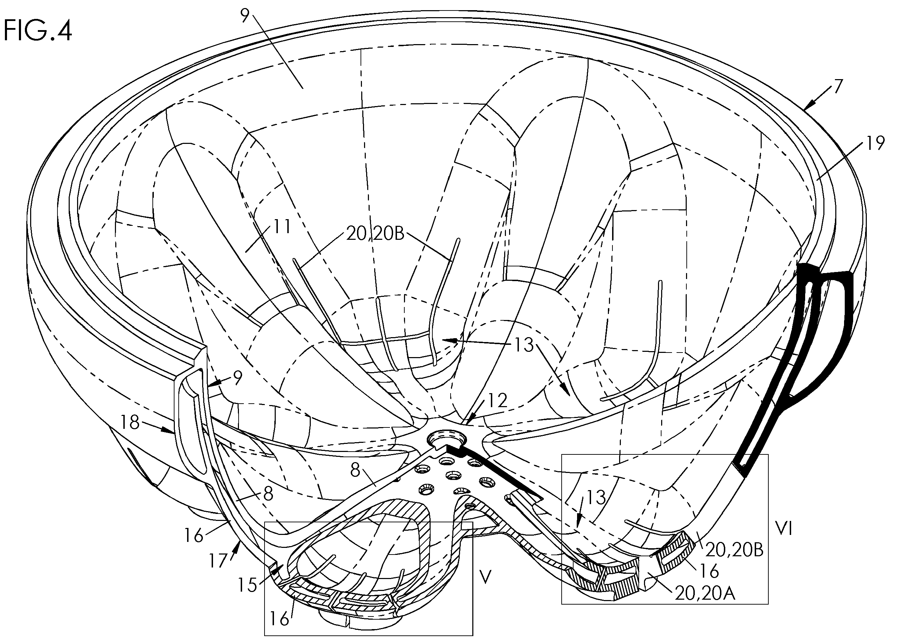

On a représenté le fond **7** de moule sur la figure 4, pour illustrer plus en détail la structure de sa cavité **15.** Ainsi, comme cela est montré sur la figure 4, la cavité **15** épouse sensiblement le relief de la face **9** de moulage. On voit que, dans le mode de réalisation représenté, la paroi **8** de moulage est mince au regard des dimensions générales (notamment diamètre et hauteur) du fond **7** de moule. Plus précisément, selon un mode particulier de réalisation, l'épaisseur de la paroi **8** de moulage (mesurée perpendiculairement à tout plan normal à la face **9** de moulage) est comprise entre 0,5 mm et 5 mm environ, de préférence entre 1 mm et 3 mm, et par exemple de l'ordre de 1 mm dans l'exemple illustré. Cette épaisseur permet de maximiser les échanges thermiques tout en minimisant la quantité de matière nécessaire à la fabrication du fond **7** de moule.

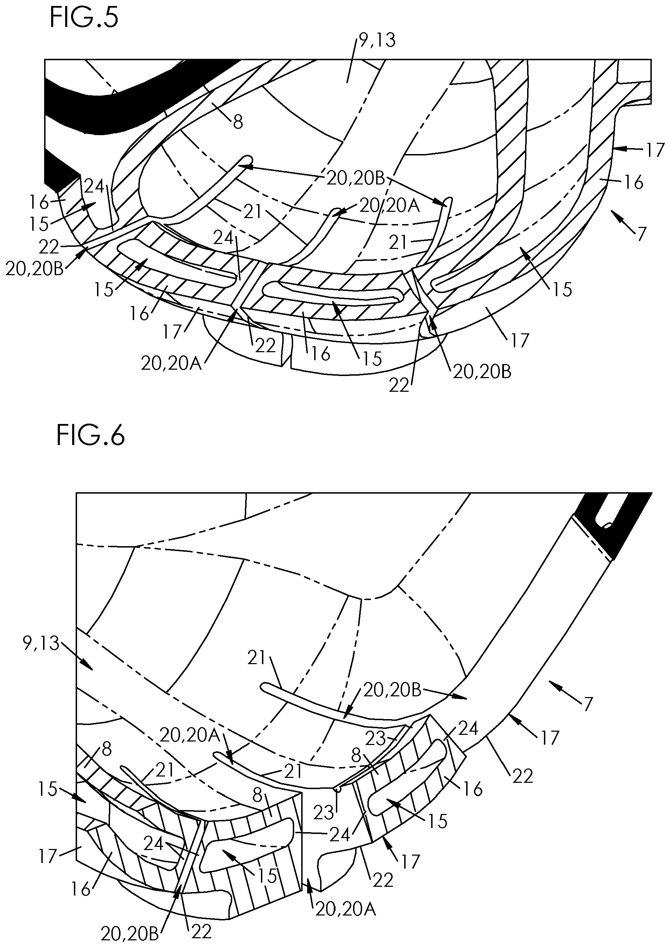

Cette épaisseur peut être sensiblement constante, comme dans l'exemple illustré sur les figures 4 ou 5, où les variations apparentes d'épaisseur résultent de ce que le plan de coupe ne coïncide pas, en certains points, avec la normale à la face **9** de moulage et sectionne donc obliquement la paroi **8** de moulage, notamment sur les flancs des nervures **11** correspondant aux vallées du récipient (à gauche sur la figure 5).

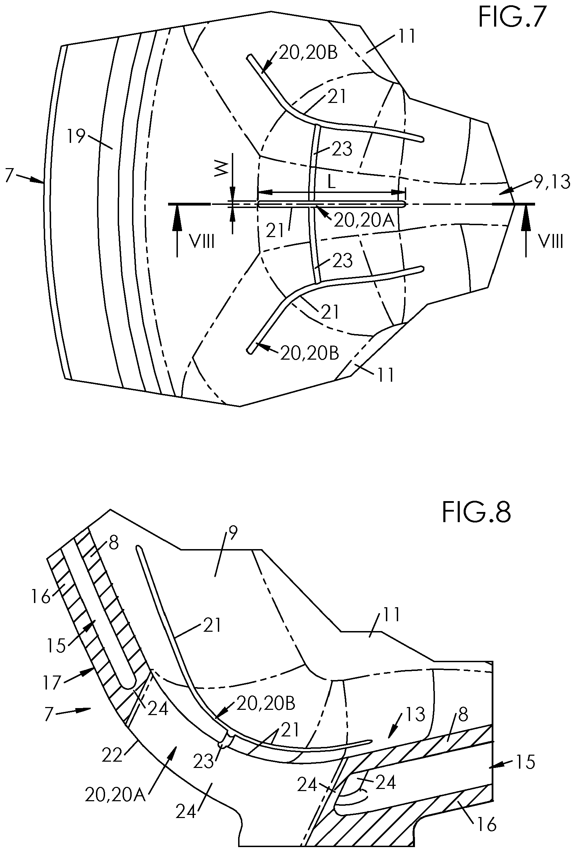

Comme on le voit sur les figures 4 et 5, le fond **7** de moule, réalisé d'une seule pièce monobloc, présente une paroi **16** secondaire qui délimite la cavité **15** en regard de la paroi de moulage. La paroi **8** de moulage et la paroi **16** secondaire forment ainsi deux nappes superposées qui épousent sensiblement le relief de la face **9** de moulage et délimitent conjointement la cavité **15.** Comme on le voit notamment sur la figure 8, la paroi **16** secondaire présente une face **17** externe tournée à l'opposé de la face **9** de moulage. Cette face **17** externe forme une enveloppe qui délimite extérieurement le fond **7** de moule.

Le fluide entre dans la cavité par une ouverture d'entrée débouchant dans celle-ci ; il en sort par une ouverture de sortie qui s'ouvre de la cavité **15** soit directement dans un conduit d'évacuation, soit, de préférence, dans un collecteur **18** périphérique qui ceinture la paroi **16** secondaire par l'extérieur, au voisinage d'un bord **19** périphérique supérieur du fond **7** de moule.

Comme on le voit par ailleurs sur les figures 2 à 8, le moule est pourvu d'évents **20** de décompression qui permettent, lorsque le récipient est formé, d'évacuer l'air emprisonné entre celui-ci et la face **9** de moulage. Dans l'exemple illustré, ces évents **20** sont formés dans le fond **7** de moule. En variante, ou en combinaison, de tels évents pourraient être formés dans chaque demi-moule **3.**

Comme on le voit bien sur les figures 5 à 8, chaque évent **20** débouche par une ouverture **21** interne sur la face **9** de moulage et, par une ouverture **22** externe, sur la face **17** externe.

L'ouverture **21** interne se présente sous forme d'une fente, c'est-à-dire qu'elle présente, à la manière d'une meurtrière, une grande dimension ou longueur **L** (qui peut être mesurée de manière rectiligne ou curviligne, selon le profil de l'ouverture **21** interne et en suivant le relief de la face **9** de moulage), et une petite dimension ou largeur **W,** telles que la longueur **L** est supérieure à la largeur **W.**

La largeur **W** de l'évent **20** est de préférence inférieure ou égale à 0,5 mm, afin d'éviter que la matière ne pénètre dans l'évent **20** pendant le formage du récipient, ce qui laisserait des marques sur la face externe de celui-ci. La largeur **W** est même avantageusement inférieure ou égale à 0,4, voire 0,3 mm, ce qui correspond approximativement à l'épaisseur de matière du récipient formé. Cette largeur **W** n'est pas nécessairement constante le long de l'ouverture **21** interne. En particulier, l'ouverture **21** interne peut présenter localement des zones rétrécies en largeur, en fonction du débit d'air souhaité. En revanche, la longueur **L** peut être quelconque.

En particulier, la longueur **L** de l'ouverture **21** interne peut être supérieure ou égale au double de la largeur **W,** ce qui permet au moins de doubler le débit d'air par rapport à un simple trou à section circulaire de diamètre **W.**

Selon un mode de réalisation préféré illustré sur les figures, le débit peut cependant être considérablement accru en réalisant un (ou plusieurs) évent(s) **20** dont l'ouverture **21** interne possède une longueur **L** très supérieure (c'est-à-dire dans un rapport au moins égal à 10) à la largeur **W.**

Ainsi, on peut prévoir un évent **20** dont la largeur **W** de l'ouverture **21** interne est d'environ 0,5 mm, tandis que la longueur **L** est comprise entre 10 mm et 20 mm. Il en résulte, par rapport à un simple trou à section circulaire de diamètre **W,** une multiplication de la section de passage de l'évent **20** (et donc du débit d'air) par un facteur compris entre 20 et 100, au bénéfice de la soufflabilité du récipient.

Dans le fond **7** de moule illustré sur les figures 2 à 8, destiné à un fond de récipient pétaloïde, il est avantageux de former l'évent **20** dans la (ou dans chaque) réserve **13** en creux.

Le profil de l'ouverture **21** interne n'est pas nécessairement rectiligne : ce profil peut en effet être curviligne, et serpenter notamment autour (ou à l'intérieur) de zones en relief de la face **9** de moulage.

Par ailleurs, afin d'accroître encore le débit d'air, plusieurs évents **20** peuvent être formés, qui s'étendent par exemple de manière sensiblement parallèle.

Ainsi, dans l'exemple illustré sur les figures 2 à 8, le fond **7** de moule comprend une série d'évents **20** (en l'espèce au nombre de trois) qui s'étendent radialement dans les réserves **13** en creux. Plus précisément, comme cela est bien visible sur la figure 7, le fond **7** de moule comprend, dans chaque réserve **13** en creux, trois évents **20,** à savoir un évent **20A** médian qui s'étend le long d'une ligne médiane de la réserve **13,** encadré d'une paire d'évents **20B** latéraux qui s'étendent sensiblement à la jonction entre la réserve **13** en creux et les nervures **11** voisines. L'évent **20A** médian est par exemple sensiblement rectiligne (lorsque vu suivant l'axe **X** du moule **1),** tandis que les évents **20B** latéraux offrent, lorsque vus suivant l'axe **X** du moule **1,** un profil courbe qui suit la jonction entre la réserve **13** en creux et les nervures **11** voisines.

Dans l'exemple illustré sur les figures 2 à 7, les évents **20B** latéraux ont une longueur supérieure à celle de l'évent **20A** médian, afin de permettre à la matière de correctement épouser la jonction entre la réserve **13** en creux et les nervures **11** voisines à distance de l'axe **X** du moule **1.**

La disposition radiale des évents **20** permet de maintenir un débit d'air élevé et de réduire celui-ci non par à-coups mais de manière continue au cours du formage, dans la mesure où la matière soufflée se déroule radialement depuis le centre du fond **7** de moule vers sa périphérie. Cette disposition permet donc d'accroître encore la soufflabilité du récipient.

Pour répartir l'air de manière relativement uniforme entre les évents **20,** ceux-ci peuvent être reliés par une gorge **23** de faible profondeur (notamment inférieure ou égale à 1 mm) creusée dans la face **9** de moulage et qui met les évents **20** voisins en communication. Dans l'exemple illustré, cette gorge **23** est en forme de gouttière (c'est-à-dire à section en forme de U) et s'étend de manière sensiblement perpendiculaire aux évents **20.**

Comme on le voit bien sur les figures 5, 6 et 8, dans le mode de réalisation où le fond **7** de moule est creusée d'une cavité **15,** chaque évent **20** s'étend au travers, conjointement, de la paroi **8** de moulage et de la paroi **16** secondaire. En d'autres termes, l'évent **20** s'étend également au travers de la cavité **15,** sans cependant y déboucher. L'évent **20** est en effet séparé de la cavité **15** par une paroi **24** à contour fermé (en l'espèce à contour ovale) qui relie la paroi **8** de moulage à la paroi **16** secondaire. Cette paroi **24** a pour fonction primaire d'assurer l'étanchéité de la cavité **15** vis-à-vis de l'évent **20** (et réciproquement), et pour fonction secondaire de rigidifier la structure du fond **7** de moule en formant un pilier de matière entre la paroi **8** de moulage et la paroi **16** secondaire.

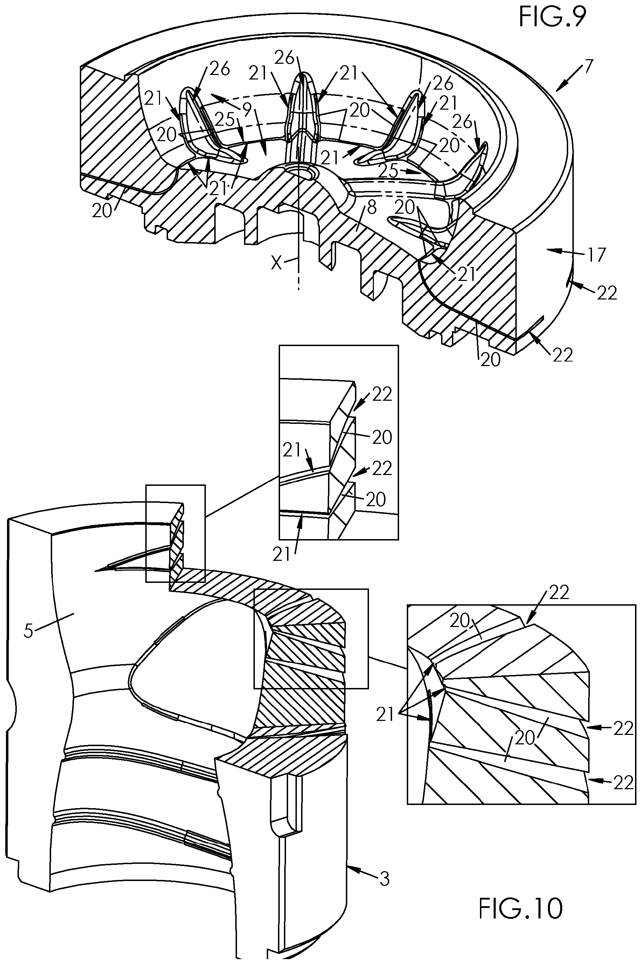

On a représenté sur la figure 9 un fond **7** de moule selon une variante de réalisation, qui correspond à un fond de récipient du type destiné à de l'eau plate.

Dans ce fond **7,** les ouvertures **21** des évents **20** s'étendent le long d'une gorge **25** périphérique, à une jonction entre une zone centrale du fond **7** correspondant à une voûte du fond du récipient, et une zone périphérique correspondant, sur le récipient, à une jonction entre la voûte et une section inférieure du corps.

Comme on peut le voir sur la figure 9, les évents **20** remontent le long de reliefs **26** correspondant sur le récipient à des rainures de raidissement. Le mode de réalisation de la figure 9 illustre le fait que les évents **20** puissent, dans la profondeur de l'élément **3, 7** de moule, s'étendre de manière quelconque, selon les contraintes imposées par la forme de l'élément **3, 7.** Dans l'exemple de la figure **9** en particulier, on voit que les évents **20** sont creusés dans la matière du fond **7** de moule de manière telle que, si une partie au moins des ouvertures **21** internes s'étendent sur une surface sensiblement perpendiculaire à l'axe **X,** les ouvertures **22** externes en revanche s'ouvrent sur une face **17** externe cylindrique du fond **7,** parallèle à l'axe **X.** De fait, on voit que les évents **20** sont creusés suivant une nappe courbe, à concavité tournée (ici) vers l'extérieur du fond **7.**

On a représenté sur la figure **10** un demi-moule dont la paroi **4** est creusée d'évents **20** ayant la particularité d'aller en s'évasant depuis leur ouverture **21** interne sur la face **5** de moulage vers leur ouverture **22** externe sur la face **17** externe, ou encore vers un collecteur ménagé dans la masse de l'élément de moule. Cette configuration favorise une bonne évacuation de l'air et illustre le fait que la section de passage des évents **20** n'est pas nécessairement constante. Un tel évasement pourrait être appliqué sans difficulté aux modes de réalisation précédemment décrit des figures 2 à 9.

La figure 10 illustre également que les évents **20** peuvent être ménagés à tout endroit utile, notamment le long de lignes où la courbure connaît de fortes variations, typiquement autour de zones en relief (en creux ou en saillie) correspondant à des empreintes formées sur le récipient (en saillie ou, respectivement, en creux).

La fabrication de l'élément **3, 7** de moule avec ses évents **20** et, le cas échéant, sa cavité **15** incluse, peut être réalisée par fabrication directe, de préférence par la technique dite de la construction laser additive directe, traduction de la terminologie anglo-saxonne Direct Metal Laser Sintering (DMLS), qui consiste, en exploitant un modèle tridimensionnel de l'élément, à déposer des couches successives d'une poudre métallique et à effectuer après chaque dépôt une fusion locale de la poudre au moyen d'un laser de puissance pointant vers les zones destinées à former la matière de l'élément à fabriquer. Après la dernière passe, l'élément ainsi fabriqué (ou une ébauche de celui-ci) est extrait tandis que la poudre résiduelle (non fondue) est récupérée en vue d'une réutilisation ultérieure. La construction laser additive directe peut être mise en oeuvre au sein d'une machine telle que celle commercialisée sous la dénomination commerciale EOSINT M 280 par la société Electro Optical Systems.

Cette technique permet notamment de réaliser le fond **7** de moule décrit ci-dessus, avec la cavité **15** totalement incluse dans la matière du fond **7** et épousant le relief de la face **9** de moulage, et les évents **20** qui s'étendent conjointement au travers de la paroi **8** de moulage, de la paroi **16** secondaire et de la cavité **15,** ce qui ne peut être réalisé à l'aide des techniques de fabrication ordinaire par enlèvement de matière, notamment par tournage ou par fraisage.

La technique de la fabrication directe permet de simplifier et d'accélérer la fabrication des éléments **3, 7** de moule en limitant le nombre de machines et d'opérations d'usinage. En pratique, la fabrication complète de l'élément **3, 7** de moule comprend deux opérations successives : une première opération de fabrication directe d'une ébauche de l'élément **3, 7,** puis une seconde opération de polissage de la face **5, 9** de moulage de l'ébauche pour obtenir l'élément **3, 7** de moule final.

Le matériau employé pour la fabrication de l'élément **3, 7** de moule est de préférence métallique ; il peut notamment s'agir d'un acier ou d'un aluminium (éventuellement allié). Dans le cas où le fluide circulant dans l'élément **3, 7** de moule est de l'eau, il est préférable que le matériau employé pour sa fabrication soit résistant à la corrosion. On emploiera donc avantageusement un acier inoxydable, dont certaines nuances sont disponibles en poudre destinées à la construction laser additive directe (par exemple l'inox martensitique référencé, en norme européenne, sous la désignation numérique 1.4542 ou sous la désignation symbolique X5CrNiCuNb16-4). Un aluminium allié au silicium et au magnésium peut également convenir : à titre d'exemple, l'alliage AlSi10Mg est disponible en poudre destinée à la construction laser additive directe.

Les évents **20** de décompression ont été décrits de manière détaillée dans le fond **7** de moule. Cependant, comme nous l'avons vu, de tels évents pourraient également être formés, de la même manière, dans chacun des demi-moules **3.** Dans la configuration illustrée sur la figure 1, où chaque demi-moule 3 est muni d'une cavité **14** incluse dans la matière, on transposera au demi-moule **3** la réalisation des évents **20** telle que décrit ci-dessus pour le fond **7** de moule (également pourvu d'une telle cavité **15).**

## Revendications

1. Elément (3, 7) de moule monobloc destiné à un moule (1) pour la fabrication de récipients par soufflage ou étirage soufflage à partir d'ébauches en matière plastique, cet élément (3, 7) de moule comprenant une paroi (4, 8) de moulage monobloc ayant une face (5, 9) de moulage en relief à l'empreinte d'au moins une partie d'un récipient, la paroi (4, 8) de moulage étant percée d'au moins un évent (20) de décompression débouchant, par une ouverture (21) interne, sur la face (9) de moulage, cet élément (3, 7) de moule étant **caractérisé en ce que**
l'ouverture (21) se présente sous forme d'une fente, et où une largeur (W) de l'évent (20) est inférieure ou égale à 0,5 mm.

2. Elément (3, 7) de moule monobloc destiné à un moule (1) pour la fabrication de récipients par soufflage ou étirage soufflage à partir d'ébauches en matière plastique, cet élément (3, 7) de moule comprenant une paroi (4, 8) de moulage monobloc ayant une face (5, 9) de moulage en relief à l'empreinte d'au moins une partie d'un récipient, la paroi (4, 8) de moulage étant percée d'au moins un évent (20) de décompression débouchant, par une ouverture (21) interne, sur la face (9) de moulage, cet élément (3, 7) de moule étant **caractérisé en ce que**
l'ouverture (21) se présente sous forme d'une fente, **en ce qu'** il comprend une paroi (16) secondaire définissant, avec la paroi (8) de moulage, une cavité (15) épousant le relief de la face (9) de moulage pour la circulation d'un fluide caloporteur, et **en ce que**
le ou chaque évent (20) s'étend au travers de la cavité (15) en étant séparé de celle-ci par une paroi (24) à contour fermé reliant la paroi (8) de moulage à la paroi (16) secondaire.

3. Elément (3, 7) de moule monobloc destiné à un moule (1) pour la fabrication de récipients par soufflage ou étirage soufflage à partir d'ébauches en matière plastique, cet élément (3, 7) de moule comprenant une paroi (4, 8) de moulage monobloc ayant une face (5, 9) de moulage en relief à l'empreinte d'au moins une partie d'un récipient, la paroi (4, 8) de moulage étant percée d'au moins un évent (20) de décompression débouchant, par une ouverture (21) interne, sur la face (9) de moulage, cet élément (3, 7) de moule étant **caractérisé en ce que**
l'ouverture (21) se présente sous forme d'une fente, où l'élément de moule est fabriqué par fabrication directe, de préférence par la technique de la construction laser additive.

4. Elément (3, 7) de moule monobloc destiné à un moule (1) pour la fabrication de récipients par soufflage ou étirage soufflage à partir d'ébauches en matière plastique, cet élément (3, 7) de moule comprenant une paroi (4, 8) de moulage monobloc ayant une face (5, 9) de moulage en relief à l'empreinte d'au moins une partie d'un récipient, la paroi (4, 8) de moulage étant percée d'au moins un évent (20) de décompression débouchant, par une ouverture (21) interne, sur la face (9) de moulage, cet élément (3, 7) de moule étant **caractérisé en ce que**
l'ouverture (21) se présente sous forme d'une fente, **en ce que** la face (9) de moulage est à l'empreinte d'un fond pétaloïde de récipient et comprend une alternance de nervures (11) à l'empreinte de vallées du fond pétaloïde, qui rayonnent à partir d'une zone (12) centrale, et de réserves (13) en creux à l'empreinte de pieds du fond pétaloïde, qui s'étendent entre les nervures (11), et **en ce que** l'élément (3, 7) de moule présente au moins un évent (20) pratiqué dans les réserves (13) en creux, **en ce que** le ou chaque évent (20) s'étend de manière radiale, élément (3, 7) **caractérisé en outre en ce qu'**
il comprend une série d'évents (20) qui s'étendent radialement dans les réserves (13) en creux et **en ce qu'**
il comprend une gorge (23) creusée dans la face (9) de moulage, et qui met les évents (20A, 20B) en communication.

5. Elément (3, 7) de moule selon l'une des revendications précédentes, **caractérisé en ce que** l'ouverture (21) interne présente une longueur (L) et une largeur (W) telles que la longueur (L) est supérieure au double de la largeur (W).

6. Elément (3, 7) de moule selon l'une des revendications précédentes, **caractérisé en ce qu'**au moins un évent (20) présente une ouverture (21) interne qui s'étend selon un profil curviligne.

7. Elément (3, 7) de moule selon l'une des revendications précédentes, **caractérisé en ce qu'**au moins un évent (20) présente une ouverture (21) interne qui s'étend selon un profil droit.

8. Elément (3, 7) de moule selon l'une des revendications précédentes, **caractérisé en ce qu'**au moins un évent (20) va en s'évasant depuis son ouverture (21) interne.

9. Elément (3, 7) de moule selon l'une des revendications précédentes, **caractérisé en ce qu'**il comprend une série d'évents (20) qui s'étendent de manière sensiblement parallèle.

10. Elément (3, 7) de moule selon la revendication 4, **caractérisé en ce qu'**il comprend, dans chaque réserve (13) en creux, trois évents (20), à savoir un évent (20A) médian qui s'étend le long d'une ligne médiane de la réserve (13), encadré d'une paire d'évents (20B) latéraux qui s'étendent sensiblement à la jonction entre la réserve (13) en creux et les nervures (11) voisines.

11. Moule (1) pour la fabrication de récipients à partir d'ébauches en matière plastique, qui comprend au moins un élément (3, 7) de moule selon l'une des revendications précédentes.

## Patentansprüche

1. Einstückiges Formelement (3, 7), das für eine Form (1) zur Herstellung von Behältern durch Blasen oder Streckblasen aus Rohlingen aus Kunststoff bestimmt ist, wobei dieses Formelement (3, 7) eine einstückige Formwand (4, 8) umfasst, die eine erhabene Formfläche (5, 9) mit dem Formabdruck wenigstens eines Teils eines Behälters aufweist, wobei die Formwand (4, 8) von wenigstens einer Dekompressionsöffnung (20) durchbrochen ist, die über eine innere Öffnung (21) auf der Formfläche (9) mündet, wobei dieses Formelement (3, 7) **dadurch gekennzeichnet ist, dass**
die Öffnung (21) die Form eines Schlitzes aufweist, und wobei eine Breite (W) der Lüftungsöffnung (20) kleiner als oder gleich 0,5 mm ist.

2. Einstückiges Formelement (3, 7), das für eine Form (1) zur Herstellung von Behältern durch Blasen oder Streckblasen aus Rohlingen aus Kunststoff bestimmt ist, wobei dieses Formelement (3, 7) eine einstückige Formwand (4, 8) umfasst, die eine erhabene Formfläche (5, 9) mit dem Formabdruck wenigstens eines Teils eines Behälters aufweist, wobei die Formwand (4, 8) von wenigstens einer Dekompressionsöffnung (20) durchbrochen ist, die über eine innere Öffnung (21) auf der Formfläche (9) mündet, wobei dieses Formelement (3, 7) **dadurch gekennzeichnet ist, dass**
die Öffnung (21) die Form eines Schlitzes aufweist, dass es eine sekundäre Wand (16) umfasst, die mit der Formwand (8) einen an das Relief der Formfläche (9) angepassten Hohlraum (15) für die Zirkulation eines Wärmeträgerfluids definiert, und dass
die oder jede Lüftungsöffnung (20) sich durch den Hohlraum (15) hindurch erstreckt und dabei von diesem durch eine Wand (24) mit geschlossener Kontur getrennt ist, welche die Formwand (8) mit der sekundären Wand (16) verbindet.

3. Einstückiges Formelement (3, 7), das für eine Form (1) zur Herstellung von Behältern durch Blasen oder Streckblasen aus Rohlingen aus Kunststoff bestimmt ist, wobei dieses Formelement (3, 7) eine einstückige Formwand (4, 8) umfasst, die eine erhabene Formfläche (5, 9) mit dem Formabdruck wenigstens eines Teils eines Behälters aufweist, wobei die Formwand (4, 8) von wenigstens einer Dekompressionsöffnung (20) durchbrochen ist, die über eine innere Öffnung (21) auf der Formfläche (9) mündet, wobei dieses Formelement (3, 7) **dadurch gekennzeichnet ist, dass**
die Öffnung (21) die Form eines Schlitzes aufweist, wobei das Formelement durch direkte Herstellung, vorzugsweise durch die Technik der additiven Laserfertigung, hergestellt ist.

4. Einstückiges Formelement (3, 7), das für eine Form (1) zur Herstellung von Behältern durch Blasen oder Streckblasen aus Rohlingen aus Kunststoff bestimmt ist, wobei dieses Formelement (3, 7) eine einstückige Formwand (4, 8) umfasst, die eine erhabene Formfläche (5, 9) mit dem Formabdruck wenigstens eines Teils eines Behälters aufweist, wobei die Formwand (4, 8) von wenigstens einer Dekompressionsöffnung (20) durchbrochen ist, die über eine innere Öffnung (21) auf der Formfläche (9) mündet, wobei dieses Formelement (3, 7) **dadurch gekennzeichnet ist, dass**
die Öffnung (21) die Form eines Schlitzes aufweist, dass die Formfläche (9) mit dem Formabdruck eines blütenblattförmigen Behälterbodens versehen ist und eine wechselnde Folge von Rippen (11) mit dem Formabdruck von Senken des blütenblattförmigen Bodens, welche sich von einem mittleren Bereich (12) aus strahlenförmig erstrecken, und von hohlen Aussparungen (13) mit dem Formabdruck von Füßen des blütenblattförmigen Bodens, welche sich zwischen den Rippen (11) erstrecken, umfasst, und dass das Formelement (3, 7) wenigstens eine Lüftungsöffnung (20) aufweist, die in den hohlen Aussparungen (13) ausgebildet ist, dass
die oder jede Lüftungsöffnung (20) sich radial erstreckt, wobei das Element (3, 7) ferner **dadurch gekennzeichnet ist, dass**
es eine Reihe von Lüftungsöffnungen (20) umfasst, welche sich in den hohlen Aussparungen (13) radial erstrecken, und dass
es eine Auskehlung (23) umfasst, welche in der Formfläche (9) ausgebildet ist und welche eine Verbindung zwischen den Lüftungsöffnungen (20A, 20B) herstellt.

5. Formelement (3, 7) nach einem der vorhergehenden Ansprüche, **dadurch gekennzeichnet, dass** die innere Öffnung (21) eine solche Länge (L) und Breite (W) aufweist, dass die Länge (L) größer als das Doppelte der Breite (W) ist.

6. Formelement (3, 7) nach einem der vorhergehenden Ansprüche, **dadurch gekennzeichnet, dass** wenigstens eine Lüftungsöffnung (20) eine innere Öffnung (21) aufweist, welche sich entlang eines krummlinigen Profils erstreckt.

7. Formelement (3, 7) nach einem der vorhergehenden Ansprüche, **dadurch gekennzeichnet, dass** wenigstens eine Lüftungsöffnung (20) eine innere Öffnung (21) aufweist, welche sich entlang eines geraden Profils erstreckt.

8. Formelement (3, 7) nach einem der vorhergehenden Ansprüche, **dadurch gekennzeichnet, dass** wenigstens eine Lüftungsöffnung (20) sich von ihrer inneren Öffnung (21) aus aufweitet.

9. Formelement (3, 7) nach einem der vorhergehenden Ansprüche, **dadurch gekennzeichnet, dass** es eine Reihe von Lüftungsöffnungen (20) umfasst, welche sich im Wesentlichen parallel erstrecken.

10. Formelement (3, 7) nach Anspruch 4, **dadurch gekennzeichnet, dass** es in jeder hohlen Aussparung (13) drei Lüftungsöffnungen (20) umfasst, nämlich eine mittlere Lüftungsöffnung (20A), welche sich entlang einer Mittellinie der Aussparung (13) erstreckt und von einem Paar seitlicher Lüftungsöffnungen (20B) eingerahmt wird, welche sich im Wesentlichen an der Verbindungsstelle zwischen der hohlen Aussparung (13) und den benachbarten Rippen (11) erstrecken.

11. Form (1) zur Herstellung von Behältern aus Rohlingen aus Kunststoff, welche wenigstens ein Formelement (3, 7) nach einem der vorhergehenden Ansprüche umfasst.

## Claims

1. One-piece mould element (3, 7) intended for a mould (1) for the manufacturing of containers by blowing or drawing and blowing from blanks made of plastic material, this mould element (3, 7) comprising a one-piece moulding wall (4, 8) having a relief moulding face (5, 9) with the imprint of at least a part of a container, the moulding wall (4, 8) being pierced with at least one decompression vent (20) emerging, through an internal opening (21), on the moulding face (9), this mould element (3, 7) being **characterized in that**
the opening (21) takes the form of a slot, and wherein a width (W) of the vent (20) is less than or equal to 0.5 mm.

2. One-piece mould element (3, 7) intended for a mould (1) for the manufacturing of containers by blowing or drawing and blowing from blanks made of plastic material, this mould element (3, 7) comprising a one-piece moulding wall (4, 8) having a relief moulding face (5, 9) with the imprint of at least a part of a container, the moulding wall (4, 8) being pierced with at least one decompression vent (20) emerging, through an internal opening (21), on the moulding face (9), this mould element (3, 7) being **characterized in that**
the opening (21) takes the form of a slot, **in that** it comprises a secondary wall (16) defining, with the moulding wall (8), a cavity (15) closely following the relief of the moulding face (9) for the circulation of a heat-transfer fluid, and **in that**
the or each vent (20) extends through the cavity (15) by being separated therefrom by a wall (24) with closed contour linking the moulding wall (8) to the secondary wall (16).

3. One-piece mould element (3, 7) intended for a mould (1) for the manufacturing of containers by blowing or drawing and blowing from blanks made of plastic material, this mould element (3, 7) comprising a one-piece moulding wall (4, 8) having a relief moulding face (5, 9) with the imprint of at least a part of a container, the moulding wall (4, 8) being pierced with at least one decompression vent (20) emerging, through an internal opening (21), on the moulding face (9), this mould element (3, 7) being **characterized in that**
the opening (21) takes the form of a slot, wherein
the mould element is manufactured by direct manufacturing, preferably using the technique of additive laser construction.

4. One-piece mould element (3, 7) intended for a mould (1) for the manufacturing of containers by blowing or drawing and blowing from blanks made of plastic material, this mould element (3, 7) comprising a one-piece moulding wall (4, 8) having a relief moulding face (5, 9) with the imprint of at least a part of a container, the moulding wall (4, 8) being pierced with at least one decompression vent (20) emerging, through an internal opening (21), on the moulding face (9), this mould element (3, 7) being **characterized in that**
the opening (21) takes the form of a slot, **in that** the moulding face (9) has the imprint of a petal-like container bottom and comprises an alternation of ribs (11) with the imprint of valleys of the petal-like bottom, which radiate from a central zone (12), and of reserves (13) hollowed out with the imprint of feet of the petal-like bottom, which extend between the ribs (11), and **in that** the mould element (3, 7) has at least one vent (20) formed in the hollowed-out reserves (13), **in that**
the or each vent (20) extends radially, which element (3, 7) is also **characterized in that**
it comprises a series of vents (20) which extend radially in the hollowed-out reserves (13) and **in that** it comprises a groove (23) hollowed out in the moulding face (9), and which connects the vents (20A, 20B).

5. Mould element (3, 7) according to one of the preceding claims, **characterized in that** the internal opening (21) has a length (L) and a width (W) such that the length (L) is greater than twice the width (W).

6. Mould element (3, 7) according to one of the preceding claims, **characterized in that** at least one vent (20) has an internal opening (21) which extends according to a curvilinear profile.

7. Mould element (3, 7) according to one of the preceding claims, **characterized in that** at least one vent (20) has an internal opening (21) which extends according to a straight profile.

8. Mould element (3, 7) according to one of the preceding claims, **characterized in that** at least one vent (20) is flared from its internal opening (21).

9. Mould element (3, 7) according to one of the preceding claims, **characterized in that** it comprises a series of vents (20) which extend substantially parallel.

10. Mould element (3, 7) according to Claim 4, **characterized in that** it comprises, in each hollowed-out reserve (13), three vents (20), namely a medium vent (20A) which extends along a median line of the reserve (13), bracketed by a pair of lateral vents (20B) which extend substantially at the join between the hollowed-out reserve (13) and the neighbouring ribs (11).

11. Mould (1) for manufacturing containers from blanks made of plastic material, which comprises at least one mould element (3, 7) according to one of the preceding claims.
